# EUROPÄISCHE PATENTSCHRIFT

(11) **EP 0 806 547 B1**
(45) Veröffentlichungstag und Bekanntmachung des Hinweises auf die Patenterteilung: **10.10.2001**
(21) Anmeldenummer: 97810210.1
(22) Anmeldetag: 10.04.1997
(51) Int. Cl.: F01D 21/04

(54) **Axialturbine eines Abgasturboladers**
Axial turbine for turbochargers
Turbine axiale pour turbocompresseurs

(30) Priorität: 08.05.1996 DE 19618313
(43) Veröffentlichungstag der Anmeldung: 12.11.1997
(73) Patentinhaber: ABB Turbo Systems AG, 5401 Baden (CH)
(72) Erfinder: Bättig, Josef, 5704 Egliswil (CH); Ricanek, Rudolf, 79809 Weilheim (DE)
(74) Vertreter: ABB Patent Attorneys

(56) Entgegenhaltungen:
- CH-A- 370 804
- DE-B- 1 036 581
- FR-A- 2 384 111
- US-A- 3 261 228
- US-A- 3 690 786
- US-A- 5 110 256
- US-A- 5 395 211

## Beschreibung

### Technisches Gebiet

Die Erfindung betrifft die Axialturbine eines mit einer Brennkraftmaschine verbundenen Abgasturboladers, gemäss dem Oberbegriff des Anspruchs 1.

### Stand der Technik

Ein entscheidendes Kriterium zur Leistungssteigerung von mit Abgasturboladern verbunden Brennkraftmaschinen ist der vom Verdichter des Abgasturboladers aufgebrachte Ladedruck. Wird der Ladedruck erhöht, kann mehr Luft in die Zylinder gepresst und so die Leistung der Brennkraftmaschine verbessert werden. Um hohe Ladedrücke zu erreichen, drehen die heute eingesetzten Abgasturbolader mit sehr hohen Umfangsgeschwindigkeiten. Insbesondere bei grösseren Abgasturboladern führt das dazu, dass die Bruchstücke einer geborstenen Laufschaufel nur durch aufwendige konstruktive Massnahmen im Turbinengehäuse zurückgehalten werden können. Aufgrund der grösseren Masse der möglichen Bruchstücke wird dieses Problem bei den sogenannten Integralturbinen noch verstärkt, weil deren Turbinenscheiben und Lauf schaufeln einstückig gefertigt sind.

Bei den bekannten Abgasturboladern mit Axialturbine steht die Turbinenscheibe axial im Gasaustrittgehäuse und ihre Laufschaufeln werden durch einen Abdeckring/Diffusor radial nach aussen begrenzt. Im Extremfall ist die Turbinenscheibe der Axialturbine mitten im Gasaustrittgehäuse angeordnet (s. Artikel von M. Appel u.a. zum Thema "Turbolader hoher spezifischer Leistung ...", in MTZ 54(1993)6, Abb. S. 288). Da bei dieser Lösung in radialer Richtung nach dem dünnen Abdeckring/Diffusor direkt die Aussenwand des Gasaustrittgehäuses bzw. der Kamin folgt, bietet sich den beim Bersten einer Laufschaufel oder der Turbinenscheibe mit hoher Geschwindigkeit nach aussen geschleuderten Bruchstücken praktisch kein Widerstand. Daher kann es zum Durchschlagen der Aussenwand des Turboladers und somit zu einer Gefährdung von Personen oder zur Beschädigung benachbarter Maschinenteile kommen.

Um dies zu verhindern werden die Abgasturbolader häufig mit einem externen Berstschutz versehen. Eine solche, an der Aussenwand der Axialturbine angebrachte Verschalung ist jedoch sehr aufwendig und damit teuer. Aus der DE-A1-42 23 496 ist auch ein interner Berstschutz für eine Axialturbine bekannt. Dazu ist am Turbinengehäuse ein sich axial im Bereich der Turbinenscheibe erstreckender Schutzring befestigt. Radial ist dieser Schutzring zwischen der Gehäusewand und der Turbinenscheibe, in geringem Abstand von deren Umlaufebene angeordnet. Ein solcher, separater Berstring erfordert jedoch neben dem Montageaufwand auch zusätzliche Fertigungskosten, was wiederum die Gesamtkosten des Abgasturboladers erhöht.

Zudem ist mit der MAN B&W NA-Turboladerbaureihe (Firmenprospekt D366002/2E "NA-type turbochargers with axial-flow turbines", S. 5, Fig. 4) ein als integraler, sich im wesentlichen radial erstreckender Bestandteil der gaseintrittseitigen Wand des Gasaustrittgehäuses ausgebildeter Berstschutzring bekannt. Letzterer ist über ein stromab angeordnetes, axiales Verlängerungsstück sowohl mit dem Gaseintrittgehäuse als auch mit dem Gasaustrittgehäuse verbunden. Dazu wird mittels relativ langer Flansche eine komplizierte, d.h. aufwendige Verbindung des Verlängerungsstücks mit dem Gaseintrittgehäuse realisiert. Solche in unmittelbarer Nachbarschaft der durch die Turbine strömenden heissen Abgase der Brennkraftmaschine angeordneten Verbindungselemente sind jedoch hohen Wärmespannungen ausgesetzt und daher stark abrissgefährdet. Dadurch kann die Funktionssicherheit eines solchen Abgasturboladers gefährdet und seine Standzeit verringert werden.
Siehe auch das Dokument DE-B-1 036 581.

### Darstellung der Erfindung

Die Erfindung versucht alle diese Nachteile zu vermeiden. Ihr liegt die Aufgabe zugrunde, einen einfachen und kostengünstigen, internen Berstschutz für die Axialturbine eines Abgasturboladers zu schaffen. Gleichzeitig soll die Funktionssicherheit des Abgasturboladers erhöht werden.

Erfindungsgemäss wird dies dadurch erreicht, dass bei einer Vorrichtung gemäss dem Oberbegriff des Anspruchs 1, der Berstschutzring als ein integraler, sich im wesentlichen radial erstreckender Bestandteil der gaseintrittseitigen Wand des Gasaustrittgehäuses ausgebildet ist. Dazu ist der Berstschutzring entweder direkt oder über ein stromauf angeordnetes axiales Verlängerungsstück mit dem Gaseintrittgehäuse verbunden.

Aufgrund dieser Ausbildung übernimmt die gaseintrittseitige Wand des Gasaustrittgehäuses die Funktion des Berstschutzes für die Turbinenscheibe. Somit ist zu diesem Zweck kein separates Bauteil erforderlich, was sowohl Kosten als auch Montagezeit einspart. Zudem kann die Verbindung des Berstschutzrings mit dem Gaseintrittgehäuse sehr kurz und kompakt gehalten, d.h. einfach und spannungsoptimiert realisiert werden. Dies senkt die Kosten des Abgasturboladers und erhöht dessen Funktionssicherheit.

In einer ersten Ausgestaltungsform der Erfindung besteht die gaseintrittseitige Wand zumindest aus dem an das Gaseintritt gehäuse anschliessenden, axialen Verlängerungsstück, einem sich vorwiegend radial dazu erstreckenden Gasaustrittstutzen sowie dem Berstschutzring. Letzterer verbindet das Verlängerungsstück mit dem Gasaustrittstutzen.

Die dreiteilig ausgebildete, gaseintrittseitige Wand des Gasaustrittgehäuses ermöglicht vorteilhaft sowohl eine relativ kurz bauende Axialturbine als auch ein relativ einfaches Gaseintrittgehäuse.

Es ist besonders zweckmässig, wenn der Berstschutzring eine axiale Länge, bzw. eine radiale Höhe aufweist, welche mindestens in etwa der Breite bzw. mindestens in etwa der halben Höhe einer Laufschaufel entsprechen. Dadurch ist der im äusseren Bereich der Turbinenscheibe umlaufend angeordnete Berstschutzring relativ massiv ausgebildet. Im Havariefall treffen die Bruchstücke der geborstenen Laufschaufel auf den axial in deren Bereich angeordneten Berstschutzring und geben dabei den grössten Teil ihrer kinetischen Energie an diesen ab. Auf diese Weise kann einem Durchschlagen der Aussenwand des Turboladers und somit der Gefährdung von Personen oder der Beschädigung benachbarter Maschinenteile vorgebeugt werden.

Besonders vorteilhaft besitzt der Berstschutzring eine axiale Länge bzw. eine radiale Höhe, welche in etwa der Breite bzw. der Höhe einer Laufschaufel entsprechen. Der somit vergrösserte Berstschutzring weist eine verbesserte Schutzwirkung auf. Er kann daher nicht nur die Bruchstücke geborstener Lauf schaufeln sondern auch die Bruchstücke der Turbinenscheibe abfangen. Jede weitere Vergrösserung der axialen Länge bzw. der radialen Höhe des Berstschutzrings ergibt eine erhöhte Sicherheit bei Havarien.

Der Gasaustrittstutzen ist gegenüber dem Berstschutzring radial nach aussen konisch erweitert, wodurch ein gleichmässig vergrösserter Durchflussquerschnitt erreicht wird. Deshalb wirkt der Gasaustrittstutzen als Diffusor, was zu einem verbesserten Turbinenwirkungsgrad führt.

Alternativ zur ersten Ausgestaltungsform der Erfindung kann die gaseintrittseitige Wand des Gasaustrittgehäuses lediglich aus dem axialen Verlängerungsstück und dem Berstschutzring bestehen, wobei letzterer stromab des Verlängerungsstücks angeordnet ist. Schliesslich kann die gaseintrittseitige Wand des Gasaustrittgehäuses auch durch den Berstschutzring und einem sich vorwiegend radial erstreckenden Gasaustrittstutzen gebildet werden. Dies führt zu einem wesentlich vereinfachten Ausbildung des Gasaustrittgehäuses.

### Kurze Beschreibung der Zeichnung

In der Zeichnung ist ein Ausführungsbeispiel der Erfindung anhand der Axialturbine eines Abgasturboladers dargestellt. Dabei zeigen:
- Fig. 1: einen Teillängsschnitt des Abgasturboladers im Bereich der Axialturbine;
- Fig. 2: eine Darstellung entsprechend Fig. 1, jedoch in einem zweiten Ausführungsbeispiel;
- Fig. 3: eine Darstellung entsprechend Fig. 1, jedoch in einem dritten Ausführungsbeispiel.

Es sind nur die für das Verständnis der Erfindung wesentlichen Elemente gezeigt. Nicht dargestellt ist von der Anlage beispielsweise die Verdichterseite des Abgasturboladers. Die Strömungsrichtung des Arbeitsmittels ist mit Pfeilen bezeichnet.

### Weg zur Ausführung der Erfindung

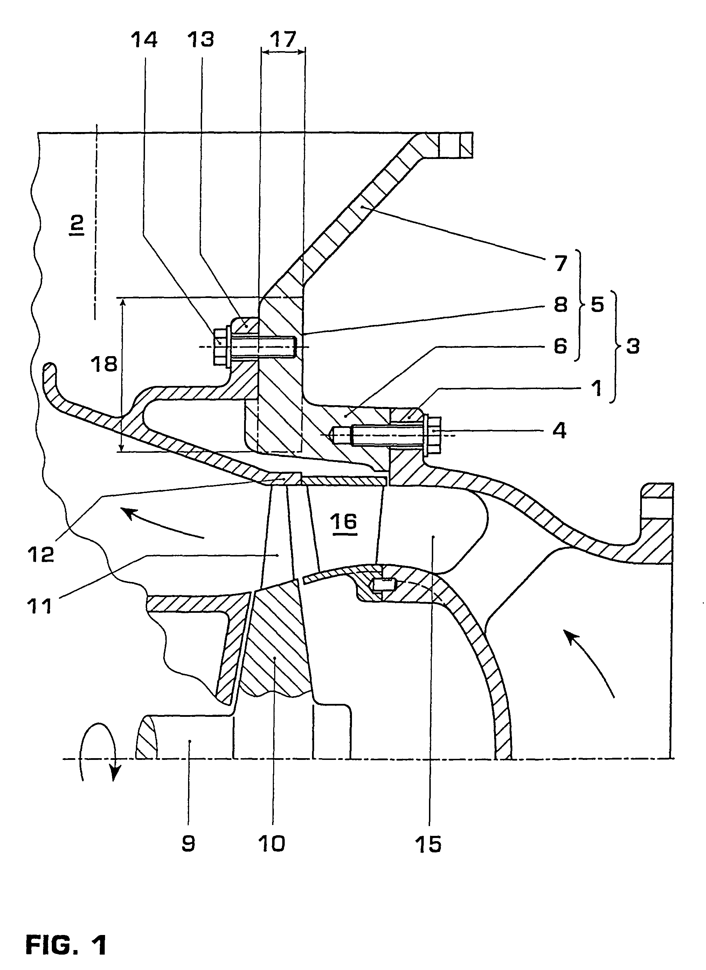

Die Axialturbine eines Turboladers weist ein von einem Gaseintritt- und einem Gasaustrittgehäuse 1, 2 gebildetes Turbinengehäuse 3 auf, welches mittels als Schrauben ausgebildeter Verbindungselemente 4 zusammengehalten wird. Das Gasaustrittgehäuse 2 besitzt eine gaseintrittseitige Wand 5 und eine verdichterseitige Wand, wobei letztere nicht dargestellt ist. Die gaseintrittseitige Wand 5 ist dreiteilig ausgebildet. Sie besteht aus einem an das Gaseintrittgehäuse 1 anschliessenden, axialen Verlängerungsstück 6, einem sich vorwiegend radial dazu erstreckenden Gasaustrittstutzen 7 sowie einem Berstschutzring 8. Das Verlängerungsstück 6 und der Gasaustrittstutzen 7 sind über den Berstschutzring 8 miteinander verbunden. Der Gasaustrittstutzen 7 ist gegenüber dem Berstschutzring 8 radial nach aussen konisch erweitert (Fig. 1).

Im Turbinengehäuse 3 ist eine von einer Welle 9 getragene Turbinenscheibe 10 mit Laufschaufeln 11 angeordnet. Die Turbinenscheibe 10 wird nach aussen von einem als Diffusor ausgebildeten Abdeckring 12 begrenzt, welcher seinerseits über einen Flansch 13 und mittels Schrauben 14 an der gaseintrittseitigen Wand 5 des Gasaustrittgehäuses 2, respektive am Berstschutzring 8 befestigt ist. Zwischen der Turbinenscheibe 10 und dem Turbinengehäuse 3 ist ein Strömungskanal 15 ausgebildet, welcher die Abgase eines nicht dargestellten, mit dem Turbolader verbundenen Dieselmotors aufnimmt und zu den Laufschaufeln 11 der Turbinenscheibe 10 weiterleitet. Natürlich kann auch eine andere Brennkraftmaschine mit dem Turbolader verbunden sein. Stromauf der Laufschaufeln 11 ist ein Düsenring 16 im Strömungskanal 15 angeordnet und axial zwischen dem Abdeckring 12 und dem Gaseintrittgehäuse 1 verspannt.

Der als integraler Bestandteil der gaseintrittseitigen Wand 5 des Gasaustrittgehäuses 2 ausgebildete Berstschutzring 8 erstreckt sich axial im Bereich der Turbinenscheibe 10 und ist in geringem radialen Abstand von der Umlaufebene ihrer Laufschaufeln 11 angeordnet. Er weist eine axiale Länge 17 bzw. eine radiale Höhe 18 auf, welche grösser als die Breite bzw. die Höhe der Laufschaufeln 11 sind.

Kommt es während dem Betrieb des Abgasturboladers zum Zerbrechen einer Laufschaufel 11, so werden deren Bruchstücke gegen den Berstschutzring 8 geschleudert. Dieser nimmt den grössten Teil ihrer kinetischen Energie auf. Wegen seiner massiven Ausbildung erfährt der Berstschutzring 8 dabei nur geringe Verformungen, so dass das Gasaustrittgehäuse 2 nicht ausgewechselt werden muss. Bei Verwendung eines in seiner radialen Höhe 18 vergrösserten Berstschutzrings 8 können sogar Bruchstücke der berstenden Turbinenscheibe 10 ohne Gefährdung von Personen und umliegend angeordneten Maschinenteilen abgefangen werden.

Aufgrund der nach radial aussen konischen Erweiterung des Gasaustrittstutzens 7 gegenüber dem Berstschutzring 8 entsteht ein entsprechend vergrösserter Durchflussquerschnitt für die in der Axialturbine entspannten Abgase des mit dem Turbolader verbundenen Dieselmotors. Dadurch wirkt der Gasaustrittstutzen 7 als Diffusor, was zu einem verbesserten Turbinenwirkungsgrad führt.

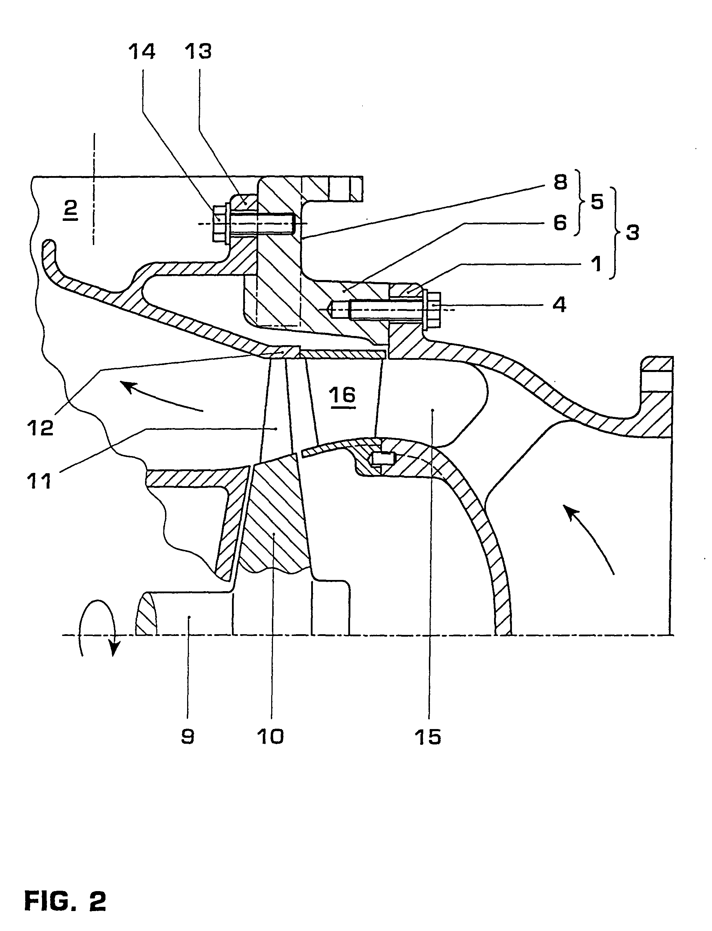

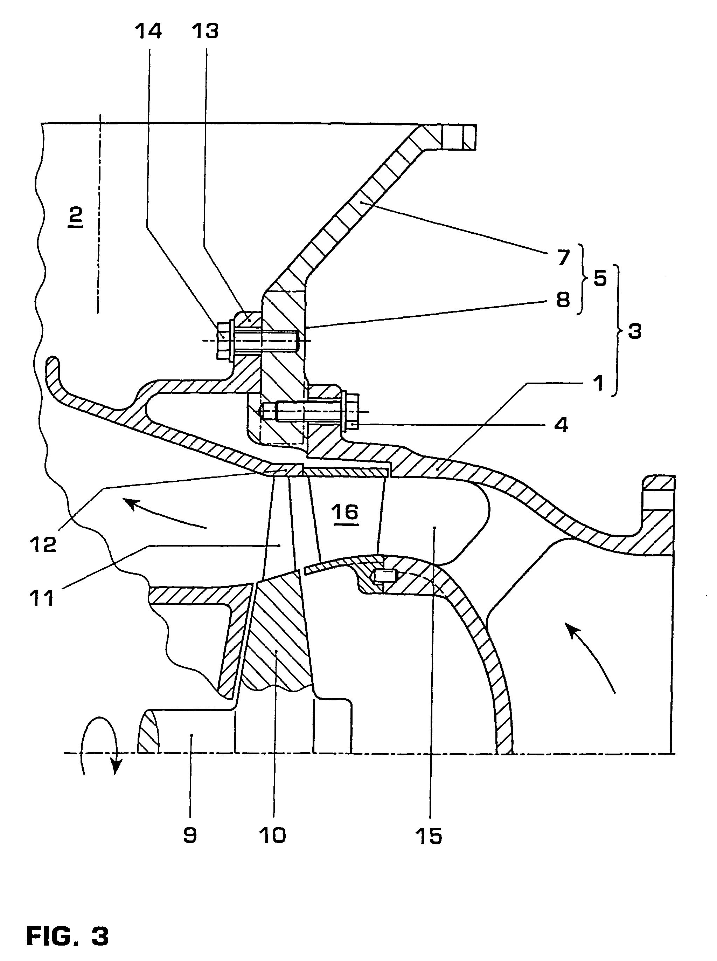

In einem zweiten und einem dritten Ausführungsbeispiel ist die gaseintrittseitige Wand 5 des Gasaustrittgehäuses 2 vereinfacht, d.h. nur zweiteilig ausgebildet. Dazu ist entweder kein Gasaustrittstutzen 7 (Fig. 2) oder kein Verlängerungsstück 6 (Fig. 3) ausgebildet, wobei im letzten Fall das Gaseintrittgehäuse 4 entsprechend verlängert wird. Die Funktion beider Lösungen ist im wesentlichen analog dem ersten Ausführungsbeispiel. Natürlich kann, indem sowohl auf den Gasaustrittstutzen 7 als auch auf das Verlängerungsstück 6 verzichtet wird, auch eine einteilige gaseintrittseitige Wand 5 des Gasaustrittgehäuses 2 realisiert werden (nicht dargestellt).

### Bezugszeichenliste

- 1: Gaseintrittgehäuse
- 2: Gasaustrittgehäuse
- 3: Turbinengehäuse
- 4: Verbindungselement, Schraube
- 5: gaseintrittseitige Wand
- 6: Verlängerungsstück
- 7: Gasaustrittstutzen
- 8: Berstschutzrinq
- 9: Welle
- 10: Turbinenscheibe
- 11: Laufschaufel
- 12: Abdeckring, Diffusor
- 13: Flansch
- 14: Schraube
- 15: Strömungskanal
- 16: Düsenring
- 17: Länge, axial
- 18: Höhe, radial

## Patentansprüche

1. Axialturbine eines Abgasturboladers, welche hauptsächlich aus einem Gaseintrittgehäuse (1), einem Gasaustrittgehäuse (2) mit einer gaseintrittseitigen Wand (5), einer umlaufenden Turbinenscheibe (10) mit einer Anzahl von Lauf schaufeln (11) und aus einem radial ausserhalb der Lauf schaufeln (11), in geringem radialen Abstand von deren Umlaufebene sowie im axialen Bereich der Turbinenscheibe (10) angeordneten Berstschutzring (8) besteht, **dadurch gekennzeichnet, dass** der Berstschutzring (8) als ein integraler, sich im wesentlichen radial erstreckender Bestandteil der gaseintrittseitigen Wand (5) des Gasaustrittgehäuses (2) ausgebildet und entweder direkt oder über ein stromauf angeordnetes axiales Verlängerungsstück (6) mit dem Gaseintrittgehäuse (1) verbunden ist.

2. Axialturbine nach Anspruch 1, **dadurch gekennzeichnet, dass** die gaseintrittseitige Wand (5) des Gasaustrittgehäuses (2) zumindest aus dem axialen Verlängerungsstück (6), einem sich vorwiegend radial dazu erstreckenden Gasaustrittstutzen (7) sowie dem Berstschutzring (8) besteht, wobei letzterer das Verlängerungsstück (6) mit dem Gasaustrittstutzen (7) verbindet.

3. Axialturbine nach Anspruch 2, **dadurch gekennzeichnet, dass** der Gasaustrittstutzen (7) gegenüber dem Berstschutzring (8) radial nach aussen konisch erweitert ausgebildet ist.

4. Axialturbine nach Anspruch 1, **dadurch gekennzeichnet, dass** die gaseintrittseitige Wand (5) des Gasaustrittgehäuses (2) zumindest aus dem axialen Verlängerungsstück (6) und dem Berstschutzring (8) besteht, wobei letzterer stromab des Verlängerungsstücks (6) angeordnet ist.

5. Axialturbine nach Anspruch 1, **dadurch gekennzeichnet, dass** die gaseintrittseitige Wand (5) des Gasaustrittgehäuses (2) zumindest aus dem Berstschutzring (8) und einem sich vorwiegend radial erstreckenden Gasaustrittstutzen (7) besteht.

6. Axialturbine nach einem der Ansprüche 2 bis 5, **dadurch gekennzeichnet, dass** der Berstschutzring (8) eine axiale Länge (17), bzw. eine radiale Höhe (18) aufweist, welche mindestens in etwa der Breite bzw. mindestens in etwa der halben Höhe einer Laufschaufel (11) entsprechen.

7. Axialturbine nach Anspruch 6, **dadurch gekennzeichnet, dass** die axiale Länge (17) bzw. die radiale Höhe (18) des Berstschutzrings (8) in etwa der Breite bzw. der Höhe einer Laufschaufel (11) entsprechen.

8. Axialturbine nach Anspruch 6, **dadurch gekennzeichnet, dass** axiale Länge (17) bzw. radiale Höhe (18) des Berstschutzrings (8) grösser als die Breite bzw. die Höhe einer Laufschaufel (11) ausgebildet sind.

## Claims

1. An axial-flow turbine of an exhaust-gas turbocharger, which axial-flow turbine mainly comprises a gas-inlet housing (1), a gas-outlet housing (2) having a gas-inlet-side wall (5), a rotating turbine disk (10) having a number of moving blades (11), and a burst-protection ring (8) arranged radially outside the moving blades (11) at a slight radial distance from their rotating plane and in the axial region of the turbine disk (10), **characterized in that** the burst-protection ring (8) is designed as an integral, essentially radially extending component of the gas-inlet-side wall (5) of the gas-outlet housing (2) and is connected to the gas-inlet housing (1) either directly or via an axial extension piece (6) arranged upstream.

2. The axial-flow turbine as claimed in claim 1, **characterized in that** the gas-inlet-side wall (5) of the gas-outlet housing (2) comprises at least the axial extension piece (6), a gas-outlet connecting piece (7) extending mainly radially thereto, and the burst-protection ring (8), the latter connecting the extension piece (6) to the gas-outlet connecting piece (7).

3. The axial-flow turbine as claimed in claim 2, **characterized in that** the gas-outlet connecting piece (7) is designed to be widened conically radially outward.

4. The axial-flow turbine as claimed in claim 1, **characterized in that** the gas-inlet-side wall (5) of the gas-outlet housing (2) comprises at least the axial extension piece (6) and the burst-protection ring (8), the latter being arranged downstream of the extension piece (6).

5. The axial-flow turbine as claimed in claim 1, **characterized in that** the gas-inlet-side wall (5) of the gas-outlet housing (2) comprises at least the burst-protection ring (8) and a mainly radially extending gas-outlet connecting piece (7).

6. The axial-flow turbine as claimed in one of claims 2 to 5, **characterized in that** the burst-protection ring (8) has an axial length (17) and a radial height (18) which correspond at least approximately to the width and at least approximately to half the height, respectively, of a moving blade (11).

7. The axial-flow turbine as claimed in claim 6, **characterized in that** the axial length (17) and the radial height (18) of the burst-protection ring (8) correspond approximately to the width and approximately to the height, respectively, of a moving blade (11).

8. The axial-flow turbine as claimed in claim 6, **characterized in that** the axial length (17) and the radial height (18) of the burst-protection ring (8) are designed to be greater than the width and the height, respectively, of a moving blade (11).

## Revendications

1. Turbine axiale d'un turbocompresseur à gaz d'échappement qui est essentiellement constituée d'un boîtier d'entrée des gaz (1), d'un boîtier de sortie des gaz (2) doté d'une paroi (5), située du côté de l'entrée des gaz, d'une roue périphérique de turbine (10) avec un certain nombre de pales (11) et d'un anneau de protection contre l'éclatement (8) disposé radialement à l'extérieur des pales (11) à petite distance radiale de leur plan périphérique ainsi que dans la région axiale de la roue de turbine (10), **caractérisée en ce que** l'anneau de protection contre l'éclatement (8) est configuré comme composant s'étendant essentiellement radialement, intégré à la paroi (5), située du côté de l'entrée des gaz, du boîtier de sortie des gaz (2), et est relié au boîtier d'entrée des gaz (1) directement ou par l'intermédiaire d'une pièce de prolongement (6) axiale disposée en amont.

2. Turbine axiale selon la revendication 1, **caractérisée en ce que** la paroi (5), située du côté de l'entrée des gaz, du boîtier de sortie des gaz (2) est constituée au moins de la pièce de prolongement (6) axiale, d'un raccord de sortie des gaz (7) qui s'étend principalement radialement par rapport à la pièce de prolongement (6) ainsi que de l'anneau de protection contre l'éclatement (8), ce dernier reliant la pièce de prolongement (6) au raccord de sortie des gaz (7).

3. Turbine axiale selon la revendication 2, **caractérisée en ce que** le raccord de sortie des gaz (7) est évasé coniquement radialement vers l'extérieur par rapport à l'anneau de protection contre l'éclatement (8).

4. Turbine axiale selon la revendication 1, **caractérisée en ce que** la paroi (5), située du côté de l'entrée des gaz, du boîtier de sortie des gaz (2) est constituée au moins de la pièce de prolongement (6) axiale et de l'anneau de protection contre l'éclatement (8), ce dernier étant disposé en aval de la pièce de prolongement (6).

5. Turbine axiale selon la revendication 1, **caractérisée en ce que** la paroi (5), située du côté de l'entrée des gaz, du boîtier de sortie des gaz (2) est constituée au moins de l'anneau de protection (8) et d'un raccord de sortie des gaz (7) qui s'étend principalement radialement.

6. Turbine axiale selon l'une des revendications 2 à 5, **caractérisée en ce que** l'anneau de protection contre l'éclatement (8) présente une longueur axiale (17) et une hauteur radiale (18) qui correspondent au moins environ respectivement à la largeur et à la moitié de la hauteur d'une pale (11).

7. Turbine axiale selon la revendication 6, **caractérisée en ce que** la longueur axiale (17) et la hauteur radiale (18) de l'anneau de protection contre l'éclatement (8) correspondent environ respectivement à la largeur et à la hauteur d'une pale (11).

8. Turbine axiale selon la revendication 6, **caractérisée en ce que** la longueur axiale (17) et la hauteur radiale (18) de l'anneau de protection contre l'éclatement (8) sont plus grandes respectivement que la largeur et que la hauteur d'une pale (11).
